# EUROPÄISCHE PATENTANMELDUNG

(11) **EP 1 103 739 A1**
(43) Veröffentlichungstag der Anmeldung: **30.05.2001**
(21) Anmeldenummer: 00124097.7
(22) Anmeldetag: 07.11.2000
(51) Int. Cl.: F16F 1/393

(54) **Elastomerlager, insbesondere Gelenklager für einen Achslenker eines Kraftfahrzeugs**

(30) Priorität: 23.11.1999 DE 19956153
(71) Anmelder: Jörn GmbH, D-70736 Fellbach (DE)
(72) Erfinder: Zawadzki, Bernd, 71404 Korb (DE); Seck, Gerhard, 73630 Remshalden (DE)
(74) Vertreter: Neubauer, Hans-Jürgen, Dipl.-Phys.

(57) **Zusammenfassung**

Die Erfindung betrifft ein Elastomerlager (1), mit einem Lagerinnenteil (2) und einem Lageraußenteil (9). Zwischen diese ist unter Vorspannung ein Relativbewegungen molekular aufnehmender Elastomerkörper (11) eingebracht, der wenigstens ein randseitig einvulkanisiertes Zwischenblech (14, 15) aufweist, auf das eine relativ dünne Elastomerhaut aufvulkanisiert ist. Die Elastomerhaut liegt an einer Anlagewand (27) des Lagerinnenteils (2) oder des Lageraußenteils (9) unter Vorspannung und unter molekularer Aufnahme von zwischen dem Zwischenblech (14, 15) und der Anlagewand (27) erfolgenden Relativbewegungen an der Anlagewand (27) an. Erfindungsgemäß ist auf dem Zwischenblech (14, 15) eine erhabene. stabile und feste Struktur (16; 29; 31) angebracht, wobei die Höhe dieser erhabenen Struktur (16; 29; 31) im Herstellzustand des Elastomerkörpers (11) geringer ist als die Elastomerhautstärke, so dass die erhabene Struktur (16; 29; 31) in der Elastomerhaut (18) aufgenommen und durch eine durchgehende Elastomerhautaußenfläche überdeckt ist. Die Strukturelemente (16; 29; 31) sind dergestalt ausgeführt und beabstandet, dass jeweils durch die Strukturelemente (16; 29; 31) zumindest in Richtung der betriebsmäßig mit großen Schubbelastungen auftretenden Relativbewegungen abgegrenzte und abgestützte Elastomerhautzonen gebildet sind. Dadurch ist die Walkarbeit in der Elastomerhaut (18) insgesamt reduzierbar, was zu einer Verschleißminderung und damit erhöhten Standzeiten führt.

## Beschreibung

Die Erfindung betrifft ein Elastomerlager, insbesondere ein Gelenklager für einen Achslenker eines Kraftfahrzeugs nach dem Oberbegriff des Anspruchs 1.

Ein bekanntes Gelenklager für einen Achslenker eines Kraftfahrzeugs (DE 196 27 753 A1 ) besteht aus einem Lagerinnenteil als erstem Lagerteil und einem das Lagerinnenteil umgebenden Lageraußenteil als zweitem Lagerteil, wobei zwischen dem Lagerinnenteil und dem Lageraußenteil wenigstens ein, Relativbewegungen molekular aufnehmender Elastomerkörper unter Vorspannung einbringbar ist. Der Elastomerkörper weist wenigstens ein randseitig einvulkanisiertes Zwischenblech auf mit einer zu einer Elastomerkörperaußenfläche weisenden, auf das Zwischenblech aufvulkanisierten, relativ dünnen Elastomerhaut bestimmter Elastomerhautstärke, wobei die Elastomerhaut an einer Anlagewand des Lagerinnenteils oder des Lageraußenteils unter Vorspannung und unter molekularer Aufnahme von zwischen dem Zwischenblech und der Anlagewand erfolgenden Relativbewegungen an der Anlagewand anliegt.

Konkret ist hier das Lagerinnenteil ballig mit beidseitig abstehenden Anschlusspratzen ausgeführt. Der Elastomerkörper ist in der axialen Längsmitte in zwei gleiche, auf das ballige Lagerinnenteil beidseitig aufsteckbare Elastomerhalbschalen geteilt, wobei als Zwischenbleche radial innere Schalenbleche mit jeweils einer am balligen Lagerinnenteil anliegenden Elastomerhaut verwendet sind. Die Elastomerhalbschalen sind axial zwischen beidseitigen Stützringen vorgespannt. Zudem weisen die Schalenbleche jeweils einen axial zur Lageraußenseite abstehenden zylindrischen Kragen auf, mit dem sie formschlüssig einen jeweils zugeordneten zylindrischen Seitenfortsatz des Lagerinnenteils umgreifen. Das ballige Lagerinnenteil kann hier scheibenförmig mit Kantenrundungen oder kugelförmig ausgebildet sein.

Die an einer Anlagewand anliegende Elastomerhaut soll durch die Vorspannung im Elastomerkörper so an die Anlagewand angepresst werden, dass betriebsmäßig eine reibschlüssige, nicht durchrutschende Anlageverbindung vorliegt, die allenfalls bei Extrembelastungen durchrutscht. Damit werden betriebsmäßig Relativbewegungen zwischen dem Zwischenblech und der Anlagewand in der relativ dünnen und damit relativ steifen Elastomerhaut aufgenommen, was zu einer hohen Walkarbeitsaufnahme mit entsprechender Eigenerwärmung in der Elastomerhaut führt. Damit können sich Materialüberlastungen ergeben, die einen Verschleiß der Gummihaut durch Abrieb oder ggf. durch Herausschmelzen begünstigen, so dass dadurch die Lagerstandzeiten begrenzt werden.

Ähnliche Probleme können auch bei Elastomerlagern mit zylindrischen Lagerinnenteilen (DE 43 22 304 C1) auftreten.

Aufgabe der Erfindung ist es, ein gattungsgemäßes Elastomerlager so weiterzubilden, dass dessen Standzeit verlängert wird.

Diese Aufgabe wird mit den Merkmalen des Anspruchs 1 gelöst.

Gemäß Anspruch 1 ist auf dem Zwischenblech eine erhabene, stabile und feste Struktur angebracht, wobei die Höhe der erhabenen Struktur im Herstellzustand des Elastomerkörpers geringer als die Elastomerhautstärke ist, so dass die erhabene Struktur in der Elastomerhaut aufgenommen und durch eine durchgehende Elastomerhautaußenfläche überdeckt ist. Die Strukturelemente sind dergestalt ausgeführt und beabstandet, dass jeweils durch die Strukturelemente zumindest in Richtung der betriebsmäßig mit großen Schubbelastungen auftretenden Relativbewegungen abgegrenzte und abgestützte Elastomerhautzonen gebildet sind.

Es hat sich gezeigt, dass mit einer solchen Struktur auf einem Zwischenblech die Walkarbeit in der Elastomerhaut insgesamt reduzierbar ist, was zu einer Verschleißminderung und damit erhöhten Standzeiten führt. Unter dem Begriff Zwischenblech werden sowohl metallische Blecheinlagen als auch ggf. dünnwandige Kunststoffzwischenlagen verstanden.

Grundsätzlich kann für aktuelle Gegebenheiten eine geeignete Größe und Anordnung von Strukturelementen einfach durch Versuche mit unterschiedlichen Anordnungen ermittelt werden. Gute Ergebnisse mit deutlich höheren Lagerstandzeiten ergeben sich nach Anspruch 2 bei einer Elastomerhaut-Schichtdicke von 0,5 mm bis 2 mm, vorzugsweise von 1 mm und entsprechend geringfügig kleineren Strukturhöhen von 0,4 mm bis 1,9 mm, vorzugsweise von 0,8 mm bis 0,9 mm. Die Abstände der Strukturelemente sollen dabei etwa 10 bis 30-fach so groß wie die Elastomerhaut-Schichtdicke sein.

Je nach den in einem konkreten Elastomerlager und in einem konkreten Einsatzfall auftretenden Belastungen kann es nach Anspruch 3 vorteilhaft, die Elastomerhautzonen durch die Strukturelemente streifenförmig oder ringförmig, insbesondere etwa rechteckförmig abzugrenzen und abzustützen.

Die erhabene Struktur auf dem wenigstens einen Zwischenblech kann durch an sich bekannte Maßnahmen hergestellt werden. Besonders geeignet sind angepunktete oder angeformte Stege nach Anspruch 4 und/oder geprägte oder angeformte Noppen nach Anspruch 5 oder geprägte stegförmige Sicken nach Anspruch 6. Mit diesen Maßnahmen kann einfach und kostengünstig eine geeignete erhabene Struktur hergestellt werden.

In einer besonders bevorzugten Ausführungsform nach Anspruch 7 ist das Elastomerlager als Gelenklager mit der Aufnahmemöglichkeit von kardanischen Lagerbewegungen ausgebildet. Ein Zwischenblech mit darauf aufvulkanisierter Elastomerhaut kann dabei sowohl zur Anlage an einer Gehäuseinnenwand des Lageraußenteils und/oder zur Anlage am Lagerinnenteil vorhanden sein. Die Vorspannung auf den Elastomerkörper kann mit an sich bekannten Maßnahmen radial und/oder axial aufgebracht werden. Beispielsweise kann dazu der Elastomerkörper in ein Gehäuse axial eingepresst und ggf. abgestützt werden. Gegebenenfalls kann das Gehäuse zur Aufbringung einer radialen Vorspannung aus zwei zusammenspannbaren Gehäuseschalen bestehen.

Mit den Merkmalen des Anspruchs 8 wird eine bevorzugte Lagerausführung mit einem balligen Lagerinnenteil und beidseitig aufsteckbaren Elastomerhalbschalen vorgeschlagen, bei denen als Zwischenbleche Schalenbleche mit einem Elastomerhautüberzug verwendet sind. Die Elastomerhalbschalen sind hier axial zwischen beidseitigen Stützringen vorgespannt. Nach Anspruch 9 weisen die Schalenbleche in an sich bekannter Weise einen abstehenden zylindrischen Kragen auf, mit dem sie formschlüssig einen zylindrischen Seitenfortsatz des Lagerinnteils umgreifen.

In einer alternativen konkreten Lagerausführung nach Anspruch 10 kann das Lagerinnenteil auch zylinderförmig mit beidseitigen Anschlusspratzen ausgebildet sein. In an sich bekannter Weise kann hier der buchsenförmige Elastomerkörper einen axialen Längsschlitz aufweisen und ggf. auf das Lagerinnenteil aufvulkanisiert sein. Der Längsschlitz wird beim Einpressen in ein zylindrisches Aufnahmeauge unter Aufbringung der erforderlichen Vorspannung im Elastomerkörper geschlossen.

Anhand einer Zeichnung wird die Erfindung näher erläutert.

Es zeigen:
- Fig. 1: ein Schnitt durch ein fertig montiertes Elastomerlager,
- Fig. 2: eine schematische Vorderansicht eines Zwischenblechs mit in Form von erhabenen Stegen ausgebildeten Strukturelementen,
- Fig. 3: eine Schnittansicht entlang der Linie A - A der Fig. 2,
- Fig. 4: eine Seitenansicht einer Elastomerhalbschale mit einem einvulkanisierten Zwischenblech,
- Fig. 5: eine schematische, vergrößerte Detailansicht der Einzelheit X aus Fig. 4,
- Fig. 6: eine schematische Vorderansicht eines Zwischenblechs mit einer erhabenen Noppenstruktur,
- Fig. 7: eine schematische Schnittansicht entlang der Linie B - B der Fig. 6
- Fig. 8: eine schematische Seitenansicht einer Elastomerhalbschale mit einem einvulkanisierten Zwischenblech,
- Fig. 9: eine schematische, vergrößerte Detaildarstellung der Einzelheit Y aus Fig. 8,
- Fig. 10: eine schematische Vorderansicht eines Zwischenblechs mit erhabenen Sicken,
- Fig. 11: eine schematische Schnittansicht entlang der Linie C - C der Fig. 10,
- Fig. 12: eine schematische Seitenansicht einer Elastomerschale mit einem einvulkanisierten Zwischenblech, und
- Fig. 13: eine schematische, vergrößerte Detaildarstellung der Einzelheit Z der Fig. 12.

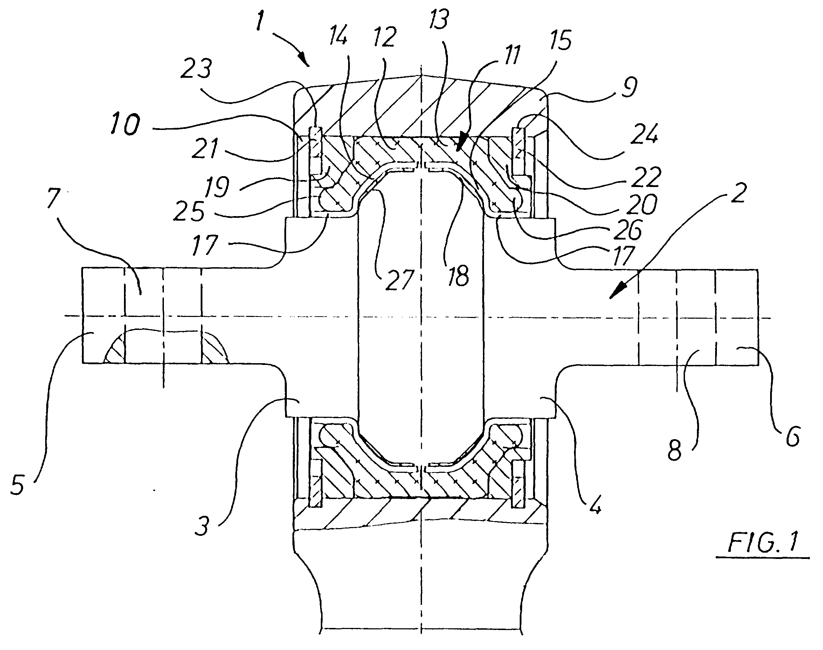

In Fig. 1 ist ein Schnitt durch ein fertig montiertes und als Gelenklager ausgebildetes Elastomerlager 1 schematisch dargestellt. Dieses Elastomerlager 1 umfasst ein metallisches, balliges Lagerinnenteil 2 als erstes Lagerteil, das jeweils in Axialrichtung abstehende zylindrische Seitenfortsätze 3, 4 aufweist. Diese zylindrischen Seitenfortsätze 3, 4 gehen in Anschlusspratzen 5, 6 über, in denen Anschlussbohrungen 7, 8 ausgebildet sind.

Das Elastomerlager 1 umfasst ferner ein das ballige, metallische Lagerinnenteil 2 umgebendes metallisches Gehäuse 9 als zweites Lagerteil, das einen zylindrischen Innenraum als Aufnahmeauge 10 aufweist.

Wie dies aus der Fig. 1 weiter ersichtlich ist, umfasst das Elastomerlager 1 ferner einen Elastomerkörper 11, der zur molekularen Aufnahme von Relativbewegungen unter einer Vorspannung zwischen dem Lagerinnenteil 2 und dem Gehäuse 9 eingebracht ist. Der Elastomerkörper 11 ist hier durch zwei gleiche Elastomerhalbschalen 12, 13 gebildet.

Wie dies aus der Fig. 1 weiter ersichtlich ist, sind die Elastomerhalbschalen 12, 13 jeweils axial zwischen beidseitigen Stützringen 19, 20 vorgespannt.

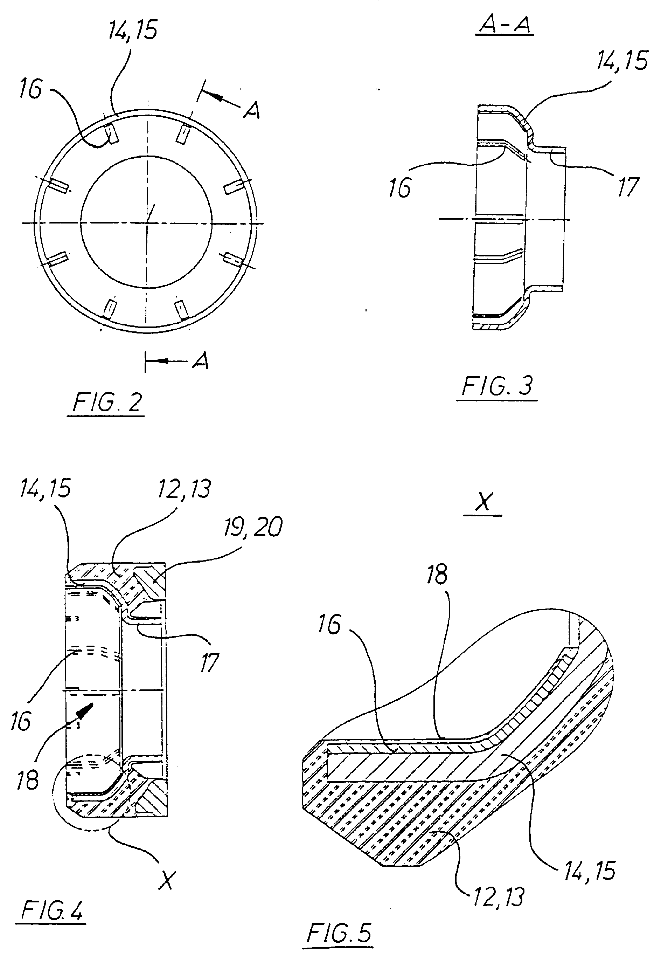

In der Fig. 4 ist schematisch und beispielhaft eine Seitenansicht einer derartigen Elastomerhalbschale 12, 13 dargestellt. Wie dies aus der Fig. 4 in Verbindung mit der Fig. 1 weiter ersichtlich ist, sind in die Elastomerhalbschalen 12, 13 jeweils radial innere Schalenbleche 14, 15 randseitig einvulkanisiert, die im in der Fig. 1 dargestellten fertig montierten Zustand des Elastomerlagers 1 jeweils ein Zwischenblech ausbilden.

In der Fig. 2 ist eine schematische Vorderansicht auf das Schalenblech 14, 15 dargestellt. Daraus ist ersichtlich, dass auf dem Schalenblech 14, 15 voneinander beabstandete Strukturelemente in Form von Stegen 16 als erhabene, stabile und feste Struktur angebracht sind, wie dies auch aus der Fig. 3, die einen Schnitt entlag der Linie A - A der Fig. 2 darstellt, ersichtlich ist. In der in der Fig. 2 dargestellten bevorzugten Ausführungsform umfasst das Schalenblech 14, 15 jeweils acht derartiger Stege 16.

Wie dies insbesondere aus der Fig. 3 ersichtlich ist, weisen die Schalenbleche 14, 15 zudem jeweils einen axial zur Lageraußenseite abstehenden zylindrischen Kragen 17 auf.

Wie dies insbesondere aus der Fig. 5 ersichtlich ist, die eine vergrößerte Darstellung der Einzelheit X der Fig. 4 zeigt, ist auf die Schalenbleche 14, 15 jeweils eine relativ dünne Elastomerhaut 18, vorzugsweise mit einer Schichtdicke von 1 mm, aufvulkanisiert. Die Höhe der Stege 16 ist dabei im Herstellzustand der Elastomerhalbschalen 12, 13 geringer als die Schichtdicke der Elastomerhaut 18, so dass die Stege 16 in der Elastomerhaut 18 aufgenommen und durch eine durchgehende Elastomerhautaußenfläche überdeckt ist. Vorzugsweise beträgt die Höhe der Stege 16 hier dann z. B. 0,8 mm bis 0,9 mm, wobei zudem vorgesehen sein kann, dass die Abstände der Stege 16 etwa 10 bis 30-fach so groß ist wie die Elastomerhaut-Schichtdicke.

Die Elastomerhalbschalen 12, 13 werden von den Anschlusspratzen 5, 6 her auf das metallische, ballige Lagerinnenteil 2 aufgeschoben, wobei der zylindrische Kragen 17 der Schalenbleche 14, 15 den jeweils zugeordneten zylindrischen Seitenfortsatz 3, 4 des Lagerinnenteils 2 formschlüssig umschließt, wie dies aus der Fig. 1 ersichtlich ist. Die axiale Vorspannung der Elastomerhalbschalen 12, 13 zwischen den beidseitigen Stützringen 19, 20 erfolgt dabei durch Federringe 21, 22, die in Nuten 23, 24 des Gehäuses 9 gehalten sind.

Wie dies aus der Fig. 1 weiter ersichtlich ist, besteht zwischen den Stützringen 19, 20 und den Krägen 17 der Schalenbleche 14, 15 jeweils ein Freiraum, in dem sich beim Aufbringen der Vorspannung das Elastomermaterial mit Wülsten 25, 26 ausbreiten kann.

Wie es aus der Fig. 1 weiter ersichtlich ist, liegt die Elastomerhaut 18 unter Vorspannung an einer Anlagewand 27 des Lagerinnenteils 2 an, wobei durch die Stege 16 zumindest in Richtung der betriebsmäßig mit großen Schubbelastungen auftretenden Relativbewegungen abgegrenzte und abgestützte Elastomerhautzonen gebildet sind. Die Elastomerhautzonen können dabei streifenförmig oder ringförmig, insbesondere in etwa rechteckförmig abgegrenzt und abgestützt sein.

Mit einer solchen durch die Stege 16 gebildeten erhabenen, stabilen und festen Struktur auf den als Zwischenblech ausgebildeten Schalenblechen 14, 15 wird erreicht, dass die Walkarbeit in der Elastomerhaut 18 insgesamt reduziert wird, was wiederum zu einer erwünschten Verschleißminderung und damit vorteilhaft erhöhten Standzeiten führt. Als Schalenbleche 14, 15 können dabei alle geeigneten Materialien verwendet werden, insbesondere metallische Blecheinlagen oder dünnwandige Kunststoffzwischenlagen sowie ggf. Kombinationen beider Materialien.

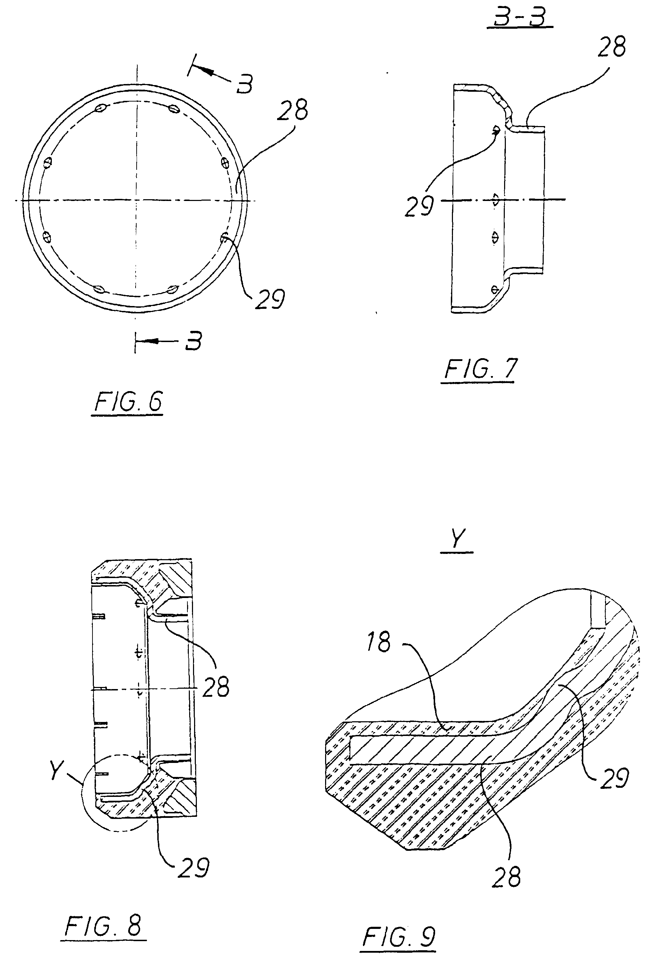

In der Fig. 6 ist eine alternative Ausführungsform eines Schalenblechs 28 als Zwischenblech dargestellt, bei dem die erhabene, stabile und feste Struktur durch beabstandete Noppen 29 gebildet ist. In der Fig. 7 ist eine schematische Schnittansicht entlang der Linie B - B der Fig. 6 dargestellt. In der Fig. 8 ist das Schalenblech 28 im in die Elastomerhalbschalen 12, 13 einvulkanisierten Zustand dargestellt. Fig. 9 stellt wiederum eine schematische, vergrößerte Detailansicht der Einzelheit Y der Fig. 8 dar, aus der insbesondere die Ausbildung der Noppen 29 in Verbindung mit der aufvulkanisierten Elastomerhaut 18 sichtbar ist.

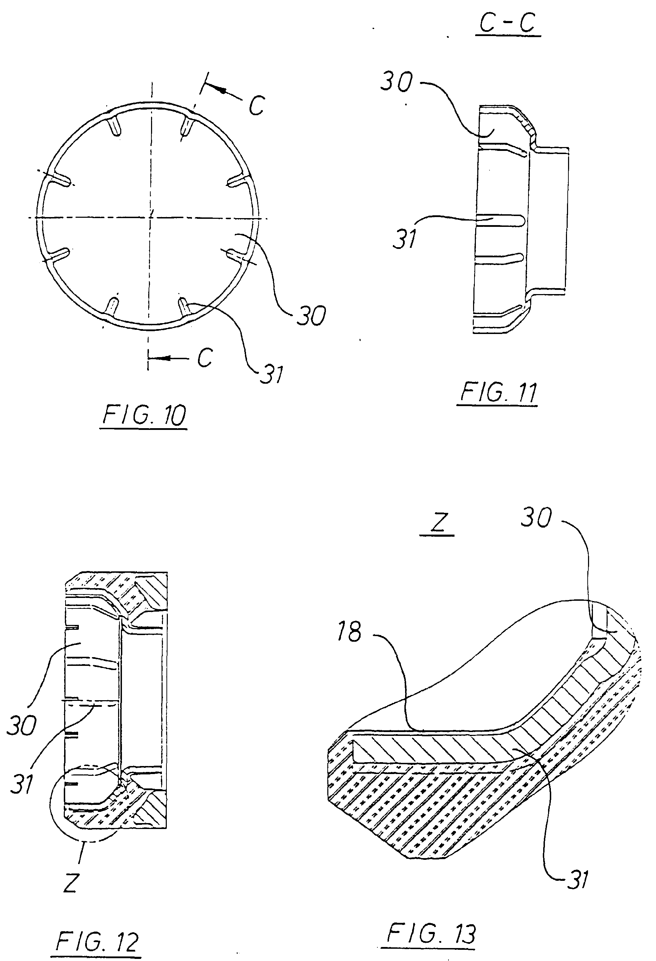

In der Fig. 10 ist schließlich eine dritte Ausführungsform eines Schalenblechs 30 in einer Vorderansicht dargestellt, bei der die Strukturelemente durch erhabene Sicken 31 gebildet sind, wie dies insbesondere aus der Fig. 11, die einen Schnitt entlang der Linie C - C der Fig. 10 darstellt, und aus den Fig. 12 und 13, die jeweils ein einvulkanisiertes Schalenblech 30 zeigen, ersichtlich ist.

## Patentansprüche

1. Elastomerlager, insbesondere Gelenklager für einen Achslenker eines Kraftfahrzeugs,
mit einem Lagerinnenteil als erstem Lagerteil und einem das Lagerinnenteil umgebenden Lageraußenteil als zweitem Lagerteil,
mit wenigstens einem unter Vorspannung zwischen dem Lagerinnenteil und dem Lageraußenteil einbringbaren, Relativbewegungen molekular aufnehmenden Elastomerkörper, wobei
der Elastomerkörper wenigstens ein randseitig einvulkanisiertes Zwischenblech aufweist mit einer zu einer Elastomerkörperaußenfläche weisenden, auf das Zwischenblech aufvulkanisierten, relativ dünnen Elastomerhaut bestimmter Elastomerhautstärke, und
die Elastomerhaut an einer Anlagewand des Lagerinnenteils oder des Lageraußenteils unter Vorspannung und unter molekularer Aufnahme von zwischen dem Zwischenblech und der Anlagewand erfolgenden Relativbewegungen an der Anlagewand anliegt,
dadurch gekennzeichnet,
dass auf dem Zwischenblech (14, 15) eine erhabene, stabile und feste Struktur (16; 29; 31) angebracht ist,
dass die Höhe der erhabenen Struktur (16; 29; 31) im Herstellzustand des Elastomerkörpers (11) geringer als die Elastomerhautstärke ist, so dass die erhabene Struktur (16; 29; 31) in der Elastomerhaut (18) aufgenommen und durch eine durchgehende Elastomerhautaußenfläche überdeckt ist, und
dass die Strukturelemente (16; 29; 31) dergestalt ausgeführt und beabstandet sind, dass jeweils durch die Strukturelemente (16; 29; 31) zumindest in Richtung der betriebsmäßig mit großen Schubbelastungen auftretenden Relativbewegungen abgegrenzte und abgestützte Elastomerhautzonen gebildet sind.

2. Elastomerlager nach Anspruch 1, dadurch gekennzeichnet,
dass die Elastomerhaut (18) eine Schichtdicke von 0,5 mm bis 2 mm, vorzugsweise von 1 mm aufweist und entsprechend die Höhe der erhabenen Struktur (16; 29; 31) geringfügig kleiner von 0,4 mm bis 1,9 mm, vorzugsweise von 0,8 mm bis 0,9 mm ist, und
dass die Abstände der Strukturelemente (16; 29; 31) etwa 10 bis 30-fach so groß wie die Elastomerhaut-Schichtdicke sind.

3. Elastomerlager nach Anspruch 1 oder Anspruch 2, dadurch gekennzeichnet, dass die Elastomerhautzonen streifenförmig oder ringförmig, insbesondere etwa rechteckförmig abgegrenzt und abgestützt sind.

4. Elastomerlager nach einem der Ansprüche 1 bis 3, dadurch gekennzeichnet, dass die Strukturelemente beabstandete Stege (16) sind.

5. Elastomerlager nach einem der Ansprüche 1 bis 3, dadurch gekennzeichnet, dass die Strukturelemente beabstandete Noppen (29) sind.

6. Elastomerlager nach einem der Ansprüche 1 bis 3, dadurch gekennzeichnet, dass die Strukturelemente beabstandete erhabene Sicken (31) sind.

7. Elastomerlager nach einem der Ansprüche 1 bis 6, dadurch gekennzeichnet,
dass das Elastomerlager (1) als Gelenklager ausgebildet ist mit einem metallischen Lagerinnenteil (2) als erstem Lagerteil mit wenigstens einem abstehenden Lageranschlussteil, vorzugsweise als Anschlusspratze (5, 6), und
mit einem metallischen Gehäuse (9) als zweitem Lagerteil, das einen zylindrischen Innenraum als Aufnahmeauge (10) aufweist, wobei der Elastomerkörper (11) mit dem wenigstens einen Zwischenblech (14, 15) und der darauf aufvulkanisierten Elastomerhaut (18) zwischen dem Lagerinnenteil (2) und dem Gehäuse (9) unter radialer und/oder axialer Vorspannung vorgespannt ist, wobei wenigstens ein Zwischenblech (14, 15) mit einer Elastomerhaut (18) radial innen am Lagerinnenteil (2) und/oder radial außen am Aufnahmeauge (10) anliegt.

8. Elastomerlager nach Anspruch 7, dadurch gekennzeichnet,
dass das Lagerinnenteil (2) ballig mit beidseitigen Anschlusspratzen (5, 6) ausgeführt ist,
dass der Elastomerkörper (11) in der axialen Längsmitte in zwei gleiche, auf das ballige Lagerinnenteil beidseitig aufsteckbare Elastomerhalbschalen (12, 13) geteilt ist, die als Zwischenbleche vorzugsweise radial innere Schalenbleche (14, 15) mit einem zumindest teilweisen Überzug mit einer Elastomerhaut (18) aufweisen, und
dass die Elastomerhalbschalen (12, 13) axial zwischen beidseitigen Stützringen (19, 20) vorgespannt sind.

9. Elastomerlager nach Anspruch 8, dadurch gekennzeichnet, dass die Schalenbleche (14, 15) jeweils einen axial zur Lageraußenseite abstehenden zylindrischen Kragen (17) aufweisen, mit dem sie formschlüssig einen jeweils zugeordneten zylindrischen Seitenfortsatz (3, 4) des Lagerinnenteils (2) umgreifen.

10. Elastomerlager nach Anspruch 7, dadurch gekennzeichnet, dass das Lagerinnenteil (2) zylinderförmig mit beidseitigen Anschlusspratzen (5, 6) ausgebildet ist.
